Europäisches Patentamt

European Patent Office

Office européen des brevets

(11) Publication number: **0 494 459 A2**

# EUROPEAN PATENT APPLICATION

(21) Application number: **91122412.9**

(22) Date of filing: **31.12.91**

(51) Int. Cl.5: **H04M 1/72**

(30) Priority: **09.01.91 US 638979**

(43) Date of publication of application:
**15.07.92 Bulletin 92/29**

(84) Designated Contracting States:
**DE FR GB**

(71) Applicant: **THOMSON CONSUMER ELECTRONICS, INC.**
**600 North Sherman Drive**
**Indianapolis Indiana 46201(US)**

(72) Inventor: **McCarthy, Dennis Ronald**
**4852 Pembridge Circle**
**Syracuse, New York 13215(US)**

(74) Representative: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

(54) Distinctive ring system for a cordless telephone.

(57) In a cordless telephone set, the DISTINCTIVE RINGING/CALL WAITING (DRCW), and SMART RING ringing patterns are substantially duplicated without sacrificing low power consumption standby mode by sending a wake-up command before only the first ring-on command, and thereafter detecting transitions of the distinctive ringing pattern and sending the appropriate ring-on and ring-off commands. When the handunit (100) detects the ring-on command, it sets a two-second timer for ending the ring signal in the event that the ring pattern is the normal ring pattern. When the base unit (120) detects a cessation of ring signals from the central office for a predetermined period of time, it resets its logic to add a wake-up command to the start of its next transmission to the handunit.

Field of the Invention

The subject application generally concerns the field of cordless telephones, and specifically concerns cordless telephones having the capability of reproducing the distinctive rings sent by telephone companies.

Background of the Invention

Cordless telephone sets comprise a base unit and a remote handunit which communicate with each other over via radio frequency (RF) transmissions. The handunit may be remote from its charging cradle, and when not in use should enter a power-saving standby mode. When in standby mode, the handunit pulses its receiver on and off in a repetitive cycle in order to minimize energy usage. The cycle time is typically 30 milliseconds "on" and 210 milliseconds "off". In order to use the handunit in either a telephone mode or a paging mode, the handunit must be "awakened" from its low power standby mode. This is accomplished by sending a "wake-up" command followed by a function command, such as ring-on, and a security code. The wake-up command is a relatively long duration audio tone (i.e., a duration greater than the standby cycle time, for example 300 milliseconds) in order to ensure that the wake-up command is detected by the handunit, and in order to ensure that enough time is provided for the handunit to power itself up in preparation to receive and execute the function command (such as "ring-on") which follows.

The base unit must detect ring signals and transmit a ring-on signal to the remote handunit. In view of the fact that in the United States the telephone ring signal has a duty cycle of two seconds on and four seconds off, many cordless telephone sets only send a "ring-on" signal to their respective handunits which turn on the ringer for a timed 2-second period. It is also common practice to send a "wake-up" tone preceding every ring-on signal.

Two problem arise in such a system. First, if the user answers an extension telephone immediately after the wake-up and ring-on signals are sent to the handunit of the cordless set, then the corded telephone will stop ringing, but the cordless telephone will ring one additional time. Second, telephone companies have started to offer services which vary the ringing pattern to let the called party know that a person with "priority" is calling. There are two such services DISTINCTIVE RINGING/CALL WAITING (DRCW), and SMART RING. With DISTINCTIVE RINGING/CALL WAITING (DRCW), a list of telephone numbers is communicated to the telephone company by a user.

Whenever the user is called from a telephone assigned to one of the numbers on the list then the telephone central office will vary the ringing pattern to alert the user that he is being called by someone to whom he has given priority (i.e., by placing them on the list). With SMART RING, the telephone company assigns a second telephone number to the existing telephone line going to a user's home. The user tells this telephone number only certain chosen people. When they dial this telephone number they are connected to the same telephone instrument but the telephone company central office central office varies the ringing pattern to, once again, alert the user that he is being called by someone to whom he has given priority. The second problem arises because a timed 2-second ring of some cordless telephones will not duplicate the distinctive patterns produced by DISTINCTIVE RINGING/CALL WAITING (DRCW), and SMART RING.

With such cordless telephone sets, one might think that the base unit could duplicate these ringing patterns by sending to the handunit a repeating series of commands such "wake-up" followed by "ring-on" followed by "ring-off". Unfortunately, a timing standard has been set for the distinctive ringing patterns (e.g., 400 milliseconds "on" and 200 milliseconds "off") which does not allow a long-duration signal such as "wake-up" to be sent with every ring repetition. A solution to the problem would be to eliminate standby mode, thus allowing the handunit to be powered-up and ready to duplicate the distinctive ring patterns at all times. Such solution is unacceptable due to the relatively short time in which the rechargeable batteries of the handunit would run down (i.e., discharge).

SUMMARY OF THE INVENTION

In a cordless telephone set, the DISTINCTIVE RINGING/CALL WAITING (DRCW), and SMART RING ringing patterns are substantially duplicated without sacrificing low power consumption standby mode by sending a wake-up command before only the first ring-on command, and thereafter detecting transitions of the distinctive ringing pattern and sending the appropriate ring-on and ring-off commands. When the handunit detects the ring-on command, it sets a two-second timer for ending the ring signal in the event that the ring pattern is the normal ring pattern. When the base unit detects a cessation of ring signals from the central office for a predetermined period of time, it resets its logic to add a wake-up command to the start of its next transmission to the handunit.

BRIEF DESCRIPTION OF THE DRAWING

FIGURE 1 shows, in schematic form, a cordless telephone set in accordance with the subject invention.

FIGURES 2a and 2b are illustrations of flowcharts of the control program for the base unit controller of FIGURE 1, and are helpful for understanding the invention.

FIGURES 3a and 3b are illustrations of flowcharts of the control program for the handunit controller of FIGURE 1, and are helpful for understanding the invention.

## DETAILED DESCRIPTION OF THE EMBODIMENT

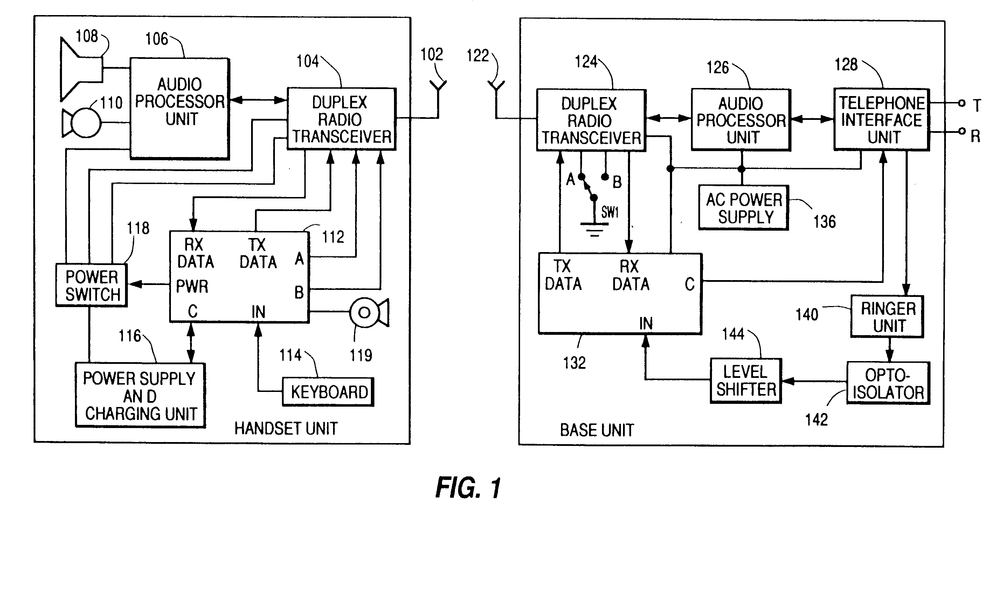

FIGURE 1 is a simplified illustration of a cordless telephone set comprising a handset unit 100 and a base unit 120. Handset unit 100 receives and transmits RF signals via an antenna 102. Antenna 102 is coupled to a duplex radio transceiver unit 104 which is capable of operation in a receiver mode and in a transmitter mode. In the receiver mode, transceiver unit 104 applies received and demodulated audio signals to an audio processor unit 106 for amplification and ultimate reproduction in speaker 108. Also in the receiver mode, transceiver 104 also provides digital data to the "receive data" (i.e., Rxdata) terminal of controller 112 In the transmitter mode, transceiver 104 receives audio signals, picked-up (i.e., detected) by microphone 110 and amplified by audio processor unit 106, for transmission to base unit 120. Also in transmitter mode, transceiver 104 receives "transmit data" (i.e., Txdata) from controller 112, for transmission to base unit 120. Controller 112 is coupled to a keyboard 114 for receiving keystroke commands from a user. Controller 112 also has two output lines A and B for controlling transceiver 104 to operate on RF communications channel A or on RF communications channel B. Handunit 100 also includes a power supply and charging unit 116 for supplying operating power to the circuitry of the handunit via a power switch unit 118. Power supply and charging unit 116 is controlled by controller 112 via a control line C. Power switch unit 118 is controlled to supply power to the other units of handset unit 100 via a control line PWR connected to controller 112. Controller 112 also controls the generation of ringer tones via a buzzer 119.

Base unit 120 receives and transmits RF signals via an antenna 122. Antenna 122 is coupled to a duplex radio transceiver unit 124 which is capable of operation in a receiver mode and in a transmitter mode. In the receiver mode, transceiver unit 124 applies received and demodulated audio signals to an audio processor unit 126 for amplification and coupling to the telephone system via a telephone interface unit 128. Telephone interface unit 128 is connected to the telephone system via two terminals traditionally known as tip (T) and ring (R). Also in the receiver mode, transceiver 124 also provides digital data to the "receive data" (i.e., Rxdata) terminal of controller 132. Controller 132 has a control terminal C by which telephone interface unit 128 can be controlled to establish communication over the telephone system. In the transmitter mode, transceiver 124 receives audio signals, conveyed by the telephone system via telephone interface unit 128 and amplified by audio processor unit 126, for transmission to handunit 100. Also in transmitter mode, transceiver 124 receives "transmit data" (i.e., Txdata) from controller 132, for transmission to handunit 100. Base unit 120 also includes an AC power supply unit 136 for supplying operating power to the circuitry of the base unit. A ringer unit 140 coupled to telephone interface unit 128 detects ring signals and couples them to an opto-isolator unit 142. Opto-isolator unit 142 isolates the remainder of the circuitry from the telephone network and also integrates the ring signals before applying them to controller 132 via a level shifter 144.

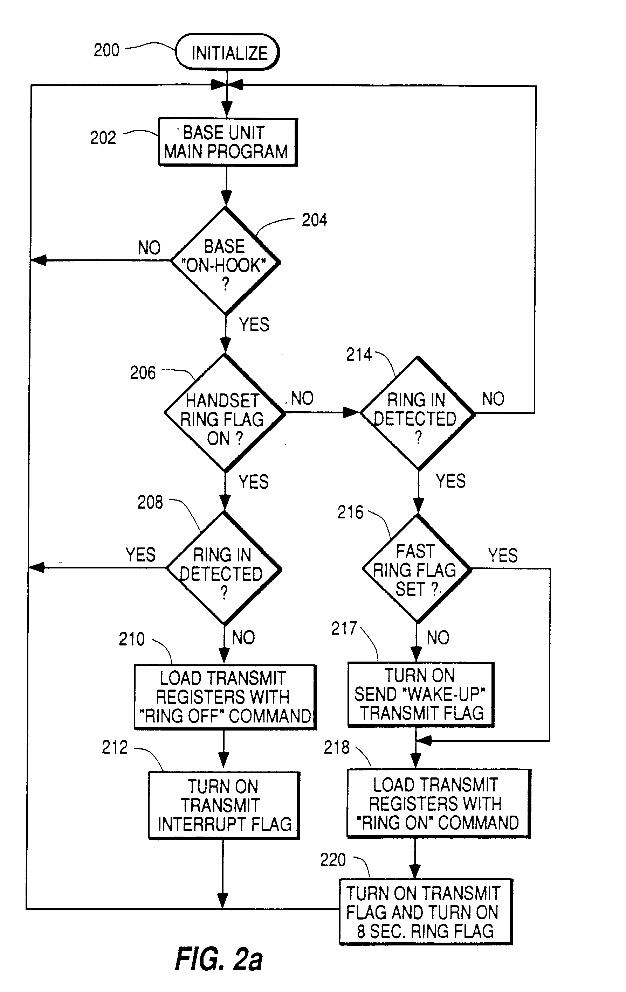

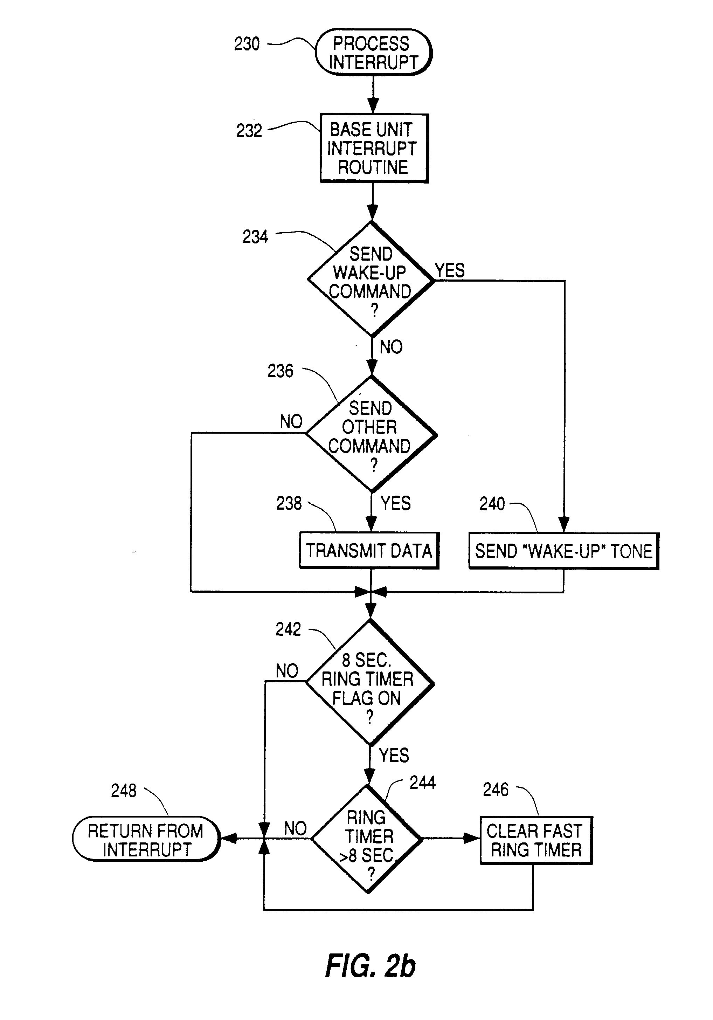

FIGURES 2a and 2b are flowcharts of portions of the control program for base unit controller 132, which may be a microcomputer, microprocessor, or a custom integrated circuit. Initialization of registers for execution of the main program is begun at step 200. The main program is entered at step 202.In step 204 a decision is made as to whether the base unit is "on-hook". If not, the program returns to step 202. If so, a decision is made in step 206 as to whether or not the handset ringing flag s on. If not, a check is made to see if a ring-in is detected (step 214), if not the program returns to step 202 If, in step 206, the handset ringing flag is on, the a check is made top see of a ring-in is detected (step 208). If yes, then the program returns to step 202. If the ring signal is stopped, then the transmit registers are loaded with a ring-off command (step 210 and the interrupt flag is set (step 212). If at step 214 a ring-in condition is detected, then a check is made to see if the fast ring flag is set (step 216). If not, the wake-up transmit flag is set (step 217), the transmit registers are loaded with a ring-on command, (step 218) and the transmit interrupt flag and 8 second ring flag are set (step 220). Steps 210 and 212, and 217-220 prepare for transmission to handunit 100 via an interrupt routine shown in FIGURE 2b. Initialization for the interrupt routine is begun at step 230. At step 232, the interrupt routine is entered. A determination is made at step 234 as to whether or not a wake-up command should be sent. If so, the command to be sent is loaded and sent (step 240). If not, a check is made to see if other commands should be sent (step 236). If yes, the data is sent (step 238). If not, the routine advances to step 242, where a check is made to see if the 8 second ring timer flag is on. If not, the routine is exited at step 248, and returns to the main program. If yes, the ring timer is checked to see if it contains a value greater than 8 seconds (step 244). If yes, the fast ring timer is cleared (step 246), and the routine is exited. If not, the routine is exited.

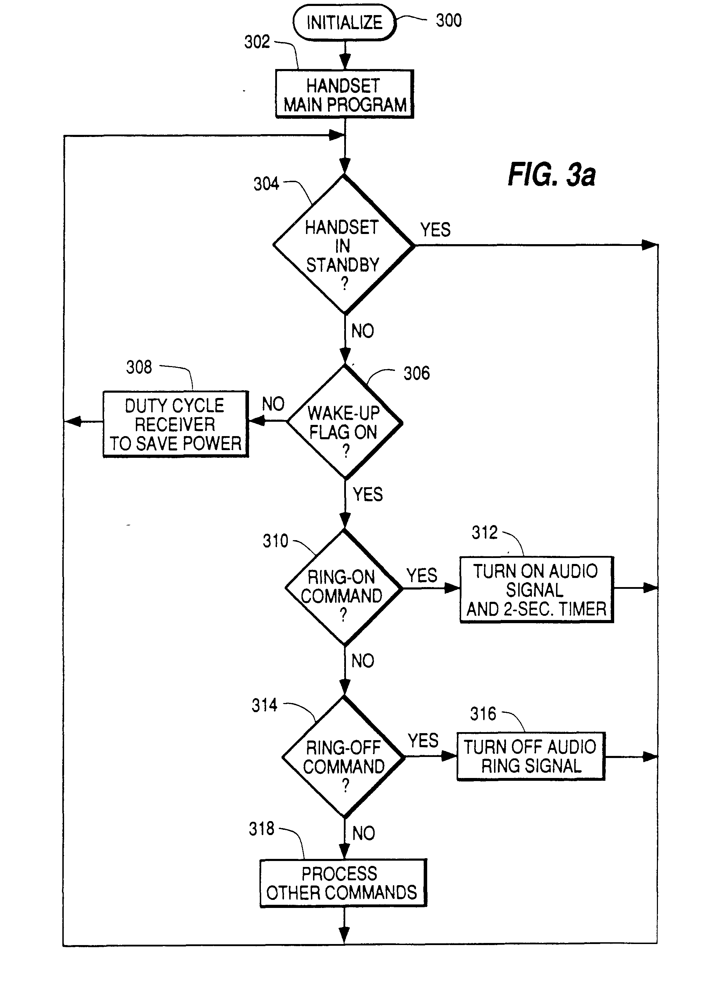

The main program for handunit controller 112 is shown in FIGURE 3a. Initialization of registers for execution of the main program is begun at step 300. The main program is entered at step 302. In step 304 a determination is made as to whether or not the handset is in standby mode. If yes, the program loops back to the beginning. If not, a check is made at step 306 to see if the wake-up flag is on. If not, the receiver is duty cycled to conserve power (step 308). If yes, a check is made to see if a ring-on signal is detected (step 310). If yes, the ringer is turned on and the 2 second timer is set (step 312). if not, a check is made to see if a ring-off command is detected (step 314). If yes, the ringer is turned off at step 316. If not, other commands are process in step 318, and the program loops back to the start.

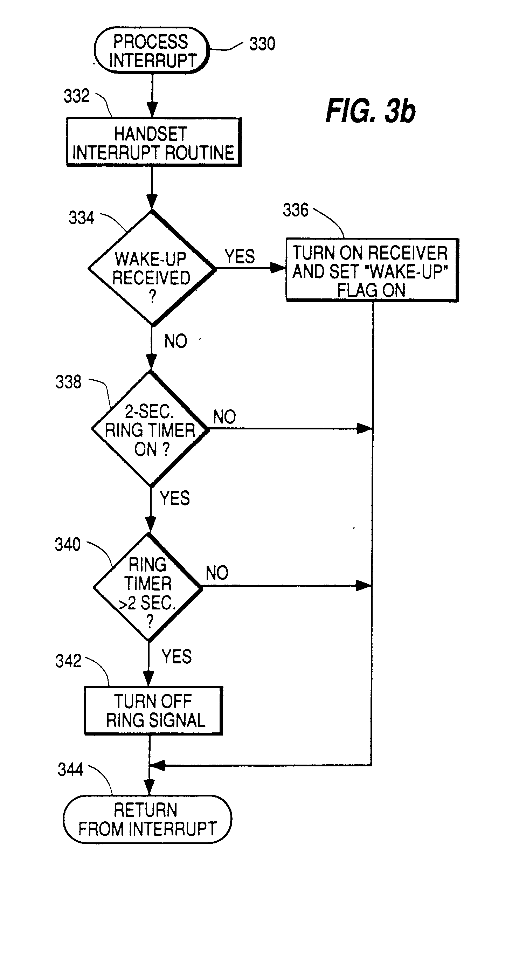

The interrupt routine for handunit controller 112 is shown in FIGURE 3b. Initialization of registers for execution of the interrupt program is begun at step 330. The interrupt routine is entered at step 332. At step 334 a check is made to see if a wake-up command has been sent by base unit 320. If so, the receiver is turned on , the wake-up flag is set (step 336), and the routine is exited at step 344. If not, a check is made to see if the 2-second ring timer is on (step 338). If not, the routine is exited at step 344. If yes, then a check is made at step 340 to see if the ring timer period is expired. If not, the routine exited at step 344. If yes, the routine advances to step 342 to turn off the ring signal, and the routine is exited at step 344.

Thus, a system has been described which allows a cordless telephone follow the DISTINCTIVE RINGING/CALL WAITING (DRCW), and SMART RING ringing patterns. The patterns are substantially duplicated (with only a slight distortion of the first ring due to the wake-up signal) without sacrificing low power consumption standby mode by sending a wake-up command before only the first ring-on command, and thereafter detecting transitions of the distinctive ringing pattern and sending the appropriate ring-on and ring-off commands.

**Claims**

1. A cordless telephone receiver, comprising:
    a base unit (120) and a handunit (100), said handunit exhibiting one of a powered-up state and a standby state;
    characterized in that

said base unit (120) sends a command to said handunit (100) for causing said handunit to enter said powered-up mode from said standby mode when said base unit sends a first command to said handunit to activate a ringer (119) of said handunit, and does not send said command to said handunit for causing said handunit to enter a powered-up mode from a standby mode with subsequent commands to activate said ringer, said base unit transmitting to said handunit ring-off commands as said base unit detects the absence of telephone company ring signals.

2. The cordless telephone receiver of claim 1, characterized in that
    said base unit (120) includes
    first antenna means (122) for receiving and transmitting RF signals;
    first transceiver means (124) coupled to said first antenna means and operating in a first mode for receiving said RF signals from said first antenna means, and a second mode for applying RF signals to said first antenna means;
    telephone system interface means (128) for coupling outgoing audio signals to, and incoming audio signals from, a telephone system;
    first audio processing means (126) coupled to said telephone system interface means for receiving said incoming audio signals, amplifying said incoming audio signals and applying said amplified incoming audio signals to said transceiver means in said second mode of operation, said audio processing means also amplifying said outgoing audio signals and coupling said amplified outgoing audio signals to said telephone system interface means in said first mode of operation; and
    first control means (132) coupled to said first transceiver means and to said telephone interface means for controlling connection of said telephone interface means to said telephone system; and
    said handunit (100) includes
    second antenna means (102) for receiving and transmitting RF signals;
    second transceiver means (104) coupled to said antenna means and operating in a first mode for receiving said RF signals from said antenna means, and a second mode for applying RF signals to said antenna means;
    microphone means (110) for receiving sound and converting it to outgoing audio signals;
    speaker means (108) for converting incoming audio signals to sound;

second audio processing means (106) coupled to said second transceiver means for receiving said incoming audio signals, amplifying said incoming audio signals and applying said amplified incoming audio signals to said speaker means in said first mode of operation, said audio processing means also being coupled to microphone means for amplifying said outgoing audio signals and coupling said amplified outgoing audio signals to said second transceiver means in said second mode of operation; and
characterized by

said first control means causing said base unit to send said command to said handunit for causing said handunit to enter a powered-up mode from a standby mode when said base unit sends a first ring-on command to said handunit to activate said ringer (119) of said handunit, and causing said base unit not send said command to said handunit for causing said handunit to enter a powered-up mode from a standby mode with subsequent commands to activate said ringer, said base unit transmitting to said handunit ring-off commands as said base unit detects the absence of telephone company ring signals.

*FIG. 1*

200 — ( INITIALIZE )

202 — BASE UNIT
MAIN PROGRAM

204 — BASE
"ON-HOOK"
? — NO →

YES

206 — HANDSET
RING FLAG
ON ? — NO → 214 — RING IN
DETECTED
? — NO

YES

208 — RING IN
DETECTED
? — YES →

NO

210 — LOAD TRANSMIT
REGISTERS WITH
"RING OFF" COMMAND

212 — TURN ON
TRANSMIT
INTERRUPT FLAG

216 — FAST
RING FLAG
SET ?. — YES →

YES

NO

217 — TURN ON
SEND "WAKE-UP"
TRANSMIT FLAG

218 — LOAD TRANSMIT
REGISTERS WITH
"RING ON" COMMAND

220 — TURN ON TRANSMIT
FLAG AND TURN ON
8 SEC. RING FLAG

**FIG. 2a**

230 — PROCESS INTERRUPT

232 — BASE UNIT INTERRUPT ROUTINE

234 — SEND WAKE-UP COMMAND ? — YES

NO

236 — SEND OTHER COMMAND ? — NO

YES

238 — TRANSMIT DATA

240 — SEND "WAKE-UP" TONE

242 — 8 SEC. RING TIMER FLAG ON ? — NO

YES

248 — RETURN FROM INTERRUPT — NO — 244 — RING TIMER >8 SEC. ? — 246 — CLEAR FAST RING TIMER

*FIG. 2b*

8

**FIG. 3a**

Flowchart:

300 — INITIALIZE

302 — HANDSET MAIN PROGRAM

304 — HANDSET IN STANDBY ? — YES →

NO ↓

306 — WAKE-UP FLAG ON ?

308 — DUTY CYCLE RECEIVER TO SAVE POWER ← NO

YES ↓

310 — RING-ON COMMAND ? — YES → 312 — TURN ON AUDIO SIGNAL AND 2-SEC. TIMER →

NO ↓

314 — RING-OFF COMMAND ? — YES → 316 — TURN OFF AUDIO RING SIGNAL →

NO ↓

318 — PROCESS OTHER COMMANDS

*FIG. 3b*

330

PROCESS
INTERRUPT

332

HANDSET
INTERRUPT ROUTINE

334

WAKE-UP
RECEIVED
?

336

YES → TURN ON RECEIVER
AND SET "WAKE-UP"
FLAG ON

NO

338

2-SEC.
RING TIMER
ON ?

NO →

YES

340

RING
TIMER
>2 SEC.
?

NO →

YES

342

TURN OFF
RING SIGNAL

344

RETURN
FROM INTERRUPT